# EUROPEAN PATENT APPLICATION

(11) **EP 2 337 318 A1**
(43) Date of publication of application: **22.06.2011**
(21) Application number: 09820514.9
(22) Date of filing: 15.09.2009
(51) Int. Cl.: H04M 1/247, G06F 3/048, H04M 1/00, H04M 1/02

(54) **DISPLAY DEVICE, PORTABLE TERMINAL, DISPLAY CONTROL METHOD, AND PROGRAM RECORDING MEDIUM**

(30) Priority: 15.10.2008 JP 2008266413
(71) Applicant: NEC Corporation, Minato-ku Tokyo 108-8001 (JP)
(72) Inventor: NAKAYAMA, Junya, Tokyo 108-8001 (JP)
(74) Representative: Glawe, Delfs, Moll
(86) International application number: PCT/JP2009/066574
(87) International publication number: WO 2010/044336

(57) **Abstract**

An object of the present invention is to provide a display apparatus or the like which can automatically switch the contents, which are displayed by a display means, in order to make it possible to continue watching a picture and to watch a desired image simultaneously with maintaining a direction of the display means. That is, a display apparatus 50 includes display means 51 which displays the picture, operation means 52 whose form for the display means 51 can be changed, and display control means 53 which carries out the following display control. It is assumed that a predetermined second image together with the picture is displayed by the display means 51. It is further assumed that the display control means 53 detects that the form of the operation means 52 for the display means 51 is changed from a predetermined second form to a predetermined first form when in a state that the second image and the picture are displayed. In the case, the display control means 53 displays a predetermined first image, which replaces the second image, together with the picture by the display means 51.

## Description

### [Technical Field]

The present invention relates to a display apparatus, a portable terminal, a display control method and a program recording medium which display a picture such as a moving picture.

### [Background Art]

A portable terminal, whose typical example is a cellular phone, becomes multifunctional progressively. In particular, a portable terminal, which has a so-called one-segment function, has been developed variously in recent years as the terrestrial digital TV broadcasting service starts. By the portable terminal with the one-segment function being enabled to carry out wireless communication by use of a frequency band excluding a frequency band assigned for the broadcast TV signal, the portable terminal with the one-segment function has a call function, an electronic mail function and an internet function or the like besides in many cases. Since it is anticipated that a situation, in which the portable terminal mentioned above receives an electronic mail or a call while displaying a TV broadcast program, is caused, it is mandatory for the portable terminal to cope with the situation.

Moreover, the one-segment portable terminal, which includes a display screen to display the TV broadcast, includes generally a operation input unit with a plurality of keys which are requisites for carrying out other function of the one-segment portable terminal. When the TV broadcast program is watched, a key to be handled is limited to a requisite key for watching TV such as an ON and OFF key, a tuning key and a volume control key. For this reason, some one-segment portable terminals are deformed so that the other key than the requisite key for the TV broadcast program may be arranged on a back side of a chassis. As a result, the one-segment portable terminal mentioned above can prevent an incorrect input. In the case of the portable terminal mentioned above, it is anticipated that a situation, in which the portable terminal receives an electronic mail or a call while displaying a TV broadcast program, is caused. In the case, it is required to deform the portable terminal so that the operation input unit may be in a form which enables the operation input unit to be handled while the portable terminal displays the TV broadcast image in parallel.

Patent literature 1 (Japanese Patent Application Laid-Open No. 2007-142762) discloses a following art. According to the art disclosed in the patent literature 1, when an electronic mail is received while a TV broadcast picture is displayed, it is determined whether a whole display screen displays the TV broadcast picture or the whole display screen is divided into sub-screens for displaying the TV broadcast picture and a mailer image separately. On the basis of the determination, the display screen is switched. The switch is carried out on the basis of a direction of the TV broadcast picture. Moreover, according to the patent literature 1, when the TV broadcast picture is displayed on the whole display screen, it is also possible to display an icon image to notify receiving the electronic mail.

Patent literature 2 (WO 2003/077097) discloses a following art. According to the patent literature 2, two chassis, each of which includes a display apparatus, are connected together by a slide rail. In the case that into a back of one chassis, the other chassis is slid, the display apparatus, which is mounted on the other chassis, cannot be used any more since one chassis hides the display apparatus of the other chassis. In contrast, in the case that the other chassis is slid to be drawn from the back of one chassis, the display apparatus of the other chassis can be used. In the case, information related to the contents displayed on the display apparatus of one chassis can be displayed on the display apparatus of the other chassis. For example, it is possible to display an image of communication partner of a video telephone on the display apparatus of one chassis, and to display simultaneously an image, which is photographed by a built-in camera, on the display apparatus of the other chassis. Moreover, in the case that the display apparatus of the other chassis is slid to be unable to be used while each of the displaying apparatuses displays the image, it is possible to combine two images and to display two combined images on the display apparatus of one chassis (to display two sub-screens).

Patent literature 3 (Japanese Patent Application Laid-Open No. 2007-312405) discloses a following art. The art disclosed in the patent literature 3 relates to a folding type portable terminal. The portable terminal includes a first display apparatus which becomes inner when the portable terminal is folded, and a second display apparatus which become outer when the portable terminal is folded. In the case that the portable terminal receives an electronic mail when the portable terminal is folded, the second display apparatus displays a receiving date and a title of the received electronic mail, and the first display apparatus displays detailed contents of the received mail when the portable terminal is unfolded.

### [Citation List]

[Patent Literature]
   [PTL1] Japanese Patent Application Laid-Open No. 2007-142762
   [PTL2] WO 2003/077097
   [PTL3] Japanese Patent Application Laid-Open No. 2007-312405

### [Summary of Invention]

### [Technical Problem]

By the way, in the case that the one-segment portable terminal receives an electronic mail while displaying a TV broadcast program, it may be requested in some cases to check the contents of the electronic mail while watching the TV broadcast program. The art disclosed in the patent literature 1 makes it possible to read the contents of the electronic mail while watching the TV broadcast program.

However, since a whole screen display and a multi-divided-screens display are switched on the basis of a direction of the picture for the display area, the screen display (whole screen display or multi-divided screens display) cannot be switched if the portable terminal is deformed while the direction of the picture for the display area is maintained, according to the patent literature 1.

In other words, according to the patent literature 1, in the case that the screen display is switched from a state in which the picture of the TV broadcast program is displayed on the whole display screen, to a state of the multi-divided-screens display to display the contents of the electronic mail together with the picture of the TV broadcast program, the direction of the picture changes. For this reason, the picture of the TV broadcast program and a character of the electronic mail are displayed with lying, and consequently a problem that it is difficult to watch the picture and to read the character is caused.

Moreover, as mentioned above, there is a request to carry out a work such as making an electronic mail while watching a picture such as one of the TV broadcast program by making it possible to handle the operation input unit while watching the picture.

The present invention has been conceived in view of a situation mentioned above. An object of the present invention is to provide a display apparatus, a portable terminal, a display control method and a program recording medium which automatically switch the contents, which are displayed by a display unit, in order to make it possible to continue watching the picture displayed by the display unit and to watch a desired image simultaneously with maintaining a direction of the display unit as it is.

### [Solution to Problem]

A display apparatus according to the present invention includes:
display means for displaying at least any one of a picture, a predetermined first image and a predetermined second image;
operation means for changing an own form for the display means between a predetermined first form and a predetermined second form; and
display control means for displaying the first image, which replaces the second image, together with the picture by the display means in the case that it is detected that the form of the operation means for the display means is changed from the second form to the first form when the second image and the picture are displayed by the display means.

A portable terminal according to the present invention is equipped with the above-mentioned display apparatus.

A display control method according to the present invention includes:
displaying a predetermined second image together with a picture by display means; and
displaying a predetermined first image, which replaces the second image, together with the picture by the display means, in the case that it is detected that operation means, which can change an own form for the display means, changes the form from a predetermined second form to a predetermined first form when in a state of displaying the second image together with the picture.

A program recording medium according to the present invention stores a program to make a display apparatus, which includes display means for displaying at least any one of an picture, a predetermined first image and a predetermined second image and operation means whose form for the display means is changed between a predetermined first form and a predetermined second form, equipped with a function to make the display means display the first image, which replaces the second image, together with the picture in the case that it is detected that the form of the operation means for the display means is changed from the second form to the first form when the second image and the picture are displayed by the display means.

### [Advantageous Effects of Invention]

According to the present invention, it is possible to automatically switch the contents, which are displayed by the display means, in order to make it possible to continue watching the picture and to watch the desired image simultaneously with maintaining the direction of the display means while watching the picture displayed by the display means.

### [Brief Description of Drawings]

FIG. 1 shows a configuration of a portable terminal according to a first exemplary embodiment.
FIG. 2A is an explanatory diagram showing one out of forms which the portable terminal can take according to the first exemplary embodiment.
FIG. 2B is an explanatory diagram showing another form out of the forms which the portable terminal can take according to the first exemplary embodiment.
FIG. 2C is an explanatory diagram showing further another form out of the forms which the portable terminal can take according to the first exemplary embodiment.
FIG. 3A shows an example which a display unit displays in the case that a form of a operation unit for the display unit is a second form according to the first exemplary embodiment.
FIG. 3B shows an example which the display unit displays in the case that the form of the operation unit for the display unit is a first form according to the first exemplary embodiment.
FIG. 4A shows another example which the display unit displays in the case that the form of the operation unit for the display unit is the second form according to the first exemplary embodiment.
FIG. 4B shows another example which the display unit displays in the case that the form of the operation unit for the display unit is the first form according to the first exemplary embodiment.
FIG. 5 is a flowchart showing an example of a display control operation carried out by the portable terminal according to the first exemplary embodiment.
FIG. 6 is a block diagram describing a configuration of a display apparatus according to a second exemplary embodiment.
FIG. 7 is an explanatory diagram showing a display control procedure which is carried out in the display apparatus according to the second exemplary embodiment.
FIG. 8 is a block diagram showing a configuration of a portable terminal which is equipped with the display apparatus of the second exemplary embodiment.

### [Explanation of references]

1 Portable terminal
10 First chassis
20 Second chassis
11 Operation input unit
11a Front key
12 Display unit
13 Detecting unit
14 Data processing unit
141 Function unit
142 Electronic mail processing unit
143 Schedule managing unit
144 Wireless communication processing unit
145 Display control unit
146 Broadcast signal processing unit
147 Playback unit
15 Storage unit
16 Tuner unit
161 Broadcast receiving antenna
17 Wireless communication unit
171 Wireless communication antenna
30 and 40 Display area
31a, 31b, 41a and 41b Picture
32 and 42 Information image
33 and 43 Function executing image
34 and 44 No-display area

### [Description of Embodiments]

Hereinafter, an exemplary embodiment according to the present invention will be described with reference to the drawings. In addition, the same reference is attached to a similar component in all drawings, and its description is omitted appropriately.

### (A first exemplary embodiment)

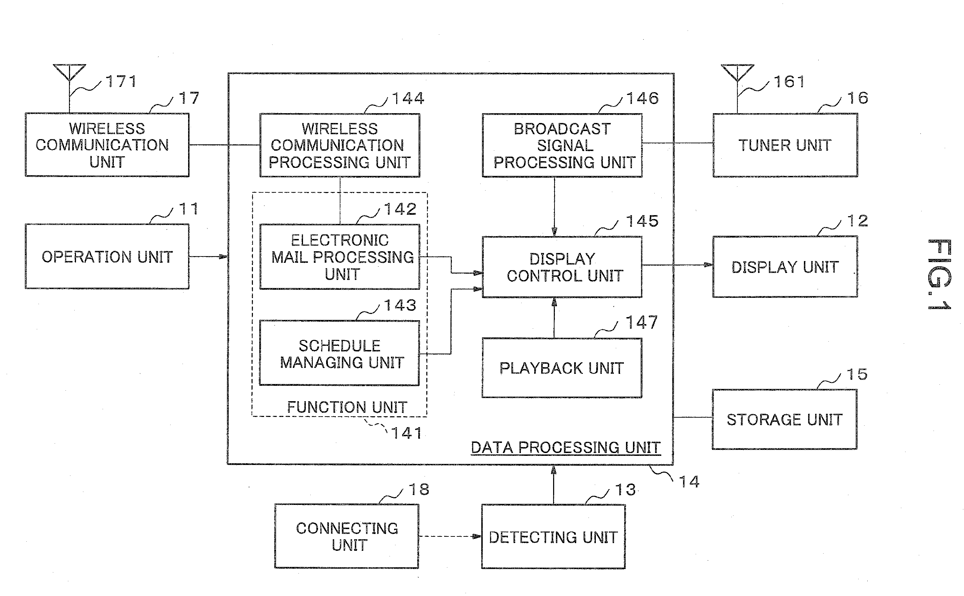

FIG. 1 shows a configuration of a portable terminal according to a first exemplary embodiment. A portable terminal 1 according to the first exemplary embodiment can automatically switch a display mode between a first display mode and a second display mode which will be described in the following. The first display mode is defined to be a display mode which a display unit (display means) 12 takes in the case that a predetermined first direction of a operation input unit (operation means) 11 and a direction along a shorter side of the display unit 12 are coincident each other (first form). The second display mode is defined to be a display mode which the display unit 12 takes in the case that a predetermined second direction of the operation input unit 11, which is different from the first predetermined direction, is coincident with the direction along the shorter side of the display unit 12 (second form). In order to enable an automatic switch between the display modes mentioned above, the portable terminal 1 according to the first exemplary embodiment includes a display control unit (display control means) 145, a function unit 141 and a detecting unit (detecting means) 13.

The function unit 141 has a function to work at a designated timing and furthermore, a function to send predetermined preparatory information (notice information) to the display control unit 145. The detecting unit 13 has a function to detect that the form of the operation unit 11 for the display unit 12 changes from one form to the other form out of the first and the second forms. The display control unit 145 has a function to control the display unit 12 so that a vertical direction of the picture displayed by the display unit 12 may be coincident with the direction along the shorter side of the display unit 12. Furthermore, the display control unit 145 has a function to control the display unit 12 so as to display information image (second image), which is based on the preparatory information (notice information), together with the picture. Furthermore, the display control unit 145 has a function to control the display unit 12 so as to display a function executing image (first image), which is corresponding to the preparatory information, in the case that the detecting unit 13 detects that the form of the operation input unit 11 is changed from the second form to the first form while displaying the information image.

A whole or a part of the configuration of the portable terminal 1 according to the first exemplary embodiment may be realized by hardware or by a program (or program code) which makes a processor execute a process. The processor reads the program from a recording medium such as a nonvolatile memory and executes the program.

In the case that the function of the portable terminal 1 is realized by a program, the program makes a processor of the portable terminal 1 execute a following process for automatically switching the first display mode and the second display mode each other. The process includes a picture displaying process which controls the display unit 12 so that the vertical direction of the displayed picture may be coincident with the direction along the shorter side of the display unit 12. Moreover, the process also includes a preparatory information informing process which executes a function of the portable terminal 1 at a designated timing and informs the preparatory information. Furthermore, the process also includes a information image displaying process which controls the display unit 12 to display the information image, which is based on the preparatory information, together with the picture. Furthermore, the process includes an execution image displaying process which displays a function executing image, which is corresponding to the preparatory information, together with the picture on the display unit 12 in the case that it is detected that the form of the operation input unit 11 is changed from the second form to the first form after the information image displaying process.

The program is stored in a recording medium (program recording medium) such as a nonvolatile memory.

In addition, the first direction and the second direction mentioned above may be determined by user. Moreover, each of the first direction and the second direction is no limited to be one direction. Details will be described later.

Further, the display control unit 145 may stop displaying the function executing image when the detecting unit 13 detects that the form of the operation input unit 11 is changed from the first form to the second form after the display control unit 145 displays the function executing image together with the picture by the display unit 12. In the case, the display control unit 145 displays only the picture by the display unit 12 after stopping displaying the function executing image.

In the first exemplary embodiment, the portable terminal 1 includes a tuner unit (tuner means) 16 which receives a TV broadcast signal sent from a broadcast station, and a broadcast signal processing unit 146 which generates at least picture data out of the TV broadcast signal which the tuner unit 16 receives. Furthermore, the display control unit 145 has a function that controls the display unit 12 so as to display a picture which is based on the picture data. As a result, it is possible that the portable terminal 1 displays the picture of the TV broadcast program on the display unit 12. The tuner unit 16 includes a broadcast receiving antenna 161 which receives the TV broadcast signal.

Furthermore, the portable terminal 1 also includes a storage unit 15 which stores at least the picture data, and a playback unit 147 which acquires the picture data from the storage unit 15 and carries out playback of the picture data. Furthermore, the display control unit 145 also has a function to control the display unit 12 to display the picture which is based on the picture data and whose playback is carried out by the playback unit 147. As a result, the portable terminal 1 can display not only the TV picture but also the picture based on the picture data, which is downloaded from a web site, or the like.

Furthermore, the portable terminal 1 according to the first exemplary embodiment includes a wireless communication unit 17 which can carry out wireless communication, and a wireless communication processing unit 144 which processes a wireless signal sent and received via the wireless communication unit 17. The function unit 141 includes an electronic mail processing unit 142 which carries out a process related to an electronic mail. The electronic mail processing unit 142 has a function to send a part of the electronic mail data, which is received via the wireless communication unit 17, as the preparatory information (notice information) to the display control unit 145. Furthermore, the display control unit 145 has a function to control the display unit 12 to display the information image, which is related to the received electronic mail, together with the picture on the basis of the preparatory information in the case that the display control unit 145 receives the preparatory information when the display unit 12 displays the picture by the display control unit 145. The wireless communication unit 17 includes a wireless communication antenna 171 which sends and receives a wireless signal.

Furthermore, the function unit 141 includes a schedule managing unit 143 which generates schedule data on the basis of information from which the operation input unit 11 is operated. The schedule managing unit 143 has a function to send a part of the schedule data as the preparatory information to the display control unit 145 at a time which is set on the basis of input information by the operation input unit 11. Furthermore, the display control unit 145 has a function to display the information image, which is based on the schedule data, together with the picture by the display unit 12 on the basis of the preparatory information in the case that the display control unit 145 receives the preparatory information from the schedule managing unit 143 when the display control unit 145 displays the picture by the display unit 12.

The function unit 141 which includes the electronic mail processing unit 142 and the schedule managing unit 143, the wireless communication processing unit 144, the display control unit 145, the broadcast signal processing unit 146, and the playback unit 147, which are mentioned above, are included in a data processing unit 14 respectively. The data processing unit 14 may be a processor such as CPU. The processor reads the program from the recording medium such as a nonvolatile memory and executes the program.

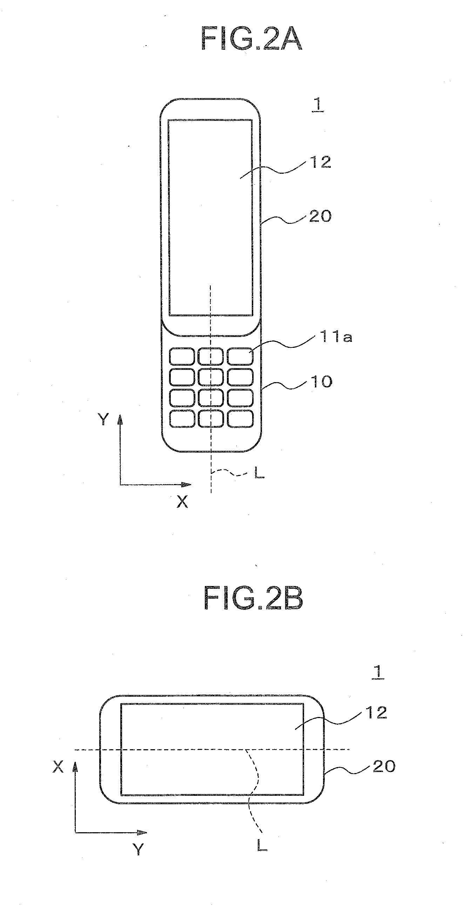

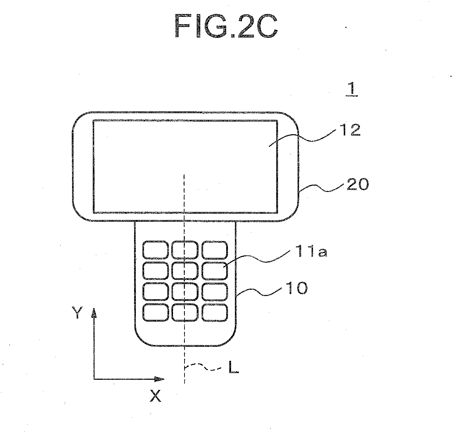

FIG. 2A, FIG. 2B and FIG. 2C are diagrams showing external forms of the portable terminal 1 according to the first exemplary embodiment. As shown in FIG. 2A, the portable terminal 1 can take a form like a character I which is formed by a connecting unit (connecting means) connecting a first chassis 10 including at least the operation input unit 11 and a second chassis 20 including at least the display unit 12 together in a vertically long form.

Moreover, the portable terminal 1 can display the picture of the TV broadcast program by the display unit 12 as mentioned above. If the TV broadcast is based on SDTV (Standard Definition Television), the aspect ratio of the picture is defined as being four to three. If the TV broadcast is based on HDTV (High Definition Television), the aspect ratio of the picture is defined as being sixteen to nine. Since the picture of the TV broadcast program is horizontally long, it is possible to use a display area of the display unit 12 effectively if the picture is displayed in a state that a direction along a shorter side of the rectangular display unit 12 and a vertical direction of the picture displayed by the display unit 12 are coincident each other.

In the case that the portable terminal 1 displays the picture by the display unit 12 so that the vertical direction of the displayed picture and the direction along the shorter side of the display unit 12 may be coincident each other when the portable terminal 1 is in a form shown in FIG. 2A, it is easy for user to watch the picture if the portable terminal 1 lies sideways. However, since a front key 11a, which is arranged on a front surface of the chassis out of keys of the operation input unit 11, also lies sideways if the portable terminal 1 lies sideways, it is difficult for user to operate the operation input unit 11. For this reason, a key related to the TV function out of the keys of the operation input unit 11 is often assigned to a side key (not shown in the figure) which is arranged on a side surface of the chassis.

As shown in FIG. 2B, the portable terminal 1 can take a form that the display unit 12 is arranged on the front surface, and the first chassis 10 is stored on the back side of the second chassis 20. In the case that the portable terminal 1 is in the form mentioned above, user cannot operate the portable terminal 1 by the front key 11a. For this reason, it is convenient if the key related to the TV function is assigned to the side key (not shown in the figure), as mentioned above.

As shown in FIG. 2C, the portable terminal 1 can take a form that the first chassis 10 and the second chassis 20 are connected each other in a form like a character T. By taking the form mentioned above, it becomes easy for user to operate the front key 11a while watching the picture displayed by the display unit 12, in comparison with the form of the portable terminal 1 shown in FIG. 2A.

According to the first exemplary embodiment, the display control unit 145 displays the picture by the display unit 12 so that the vertical direction of the displayed picture and the direction along the shorter side of the display unit 12 may be coincident each other. A Y axial direction and a X axial direction shown in FIGs. 2A to 2C are defined as being a first direction and a second direction respectively. As a result, the form which is shown in FIG. 2C is included in the first form (form that the predetermined first direction of the operation input unit 11 and the direction along the shorter side of the display unit 12 are coincident each other). The forms shown in FIG. 2A and FIG. 2B are included in the second form (form that the predetermined second direction of the operation input unit 11 and the direction along the shorter side of the display unit 12 are coincident each other). As mentioned above, an angle of the first direction to the second direction is 90 degrees according to the first exemplary embodiment.

In other words, as shown in FIGs. 2A to 2C, a virtual base line L set on the operation input unit (operation unit) 11 is defined to be a straight line, which extends in the Y direction, according to the first exemplary embodiment. In the case, the first form of the operation input unit 11 (see FIG. 2C) means that the operation input unit 11 is arranged in relation to the display unit 12 so that a direction in which the virtual base line L of the operation input unit 11 extends, and the direction along the shorter side of the rectangular display unit 12 may be coincident each other. The second form of the operation input unit 11 (see FIG. 2A and FIG. 2B) means that the operation input unit 11 is arranged in relation to the display unit 12 so that the direction in which the virtual base line L of the operation input unit 11 extends, and the direction along the shorter side of the rectangular display unit 12 may cross at right angles each other. In the case that posture of the display unit 12 is the same, an angle of the virtual base line L of the operation input unit 11 which is in the first form with respect to the virtual base line L of the operation input unit 11 which is in the second form is 90 degrees, according to the first exemplary embodiment.

Further, the first form may include a form that the first chassis 10 and the second chassis 20 are in a form like a character L, and a form that the first chassis 10 and the second chassis 20 are in a form like a inverted character L in addition to the form that the first chassis 10 and the second chassis 20 are in the form like the character T shown in FIG. 2C.

Furthermore, each of the first direction and the second direction of the operation input unit 11 is no limited to be one direction as mentioned above. For example, an angle of the first direction to the Y axis direction may be ranged within 15 degrees in the right direction or in the left direction of the Y axis. In the case, a form, in which the second chassis 20 rotates round the first chassis 10 in the right direction or in the left direction as a rotation center of the connecting unit and consequently, the direction along the shorter side of the display unit 12 becomes slant to the Y axis in the right direction or in the left direction, is defined as being the first form under the condition that the rotation angle of the connecting unit is not larger than 15 degrees.

Moreover, an angle of the first direction to the Y axis direction may be ranged within 30 degrees in a folding direction or in a unfolding direction. In the case, a mode, in which the second chassis 20 rotates round the first chassis 10 in the folding direction or in the unfolding direction as a rotation center of the connecting unit and consequently, the direction along the shorter side of the display unit 12 becomes slant to the Y axis in the folding direction or in the unfolding direction, is defined as being the first mode under the condition that the rotation angle of the connecting unit is not larger than 30 degrees.

The detecting unit 13 detects that the form of the operation input unit 11 is changed from the first form to the second form. There are various types of the detecting unit 13 on the basis of the configuration of the portable terminal 1. For example, the detecting unit 13 detects a change of form from one form to the other form out of the first form and the second form on the basis of a movement of a connecting unit 18 (see FIG. 1) which connects the first chassis 10 and the second chassis 20 together. As a specific example, in the case that the connecting unit 18 is a hinge, the detecting unit 13 detects a change of form from one form to the other form out of the first form and the second form on the basis of a rotary movement of the hinge.

More specifically, for example, the detecting unit 13 includes a rotation detecting switch which is equipped on the hinge and turns on and off at a predetermined rotation angle position of the hinge.

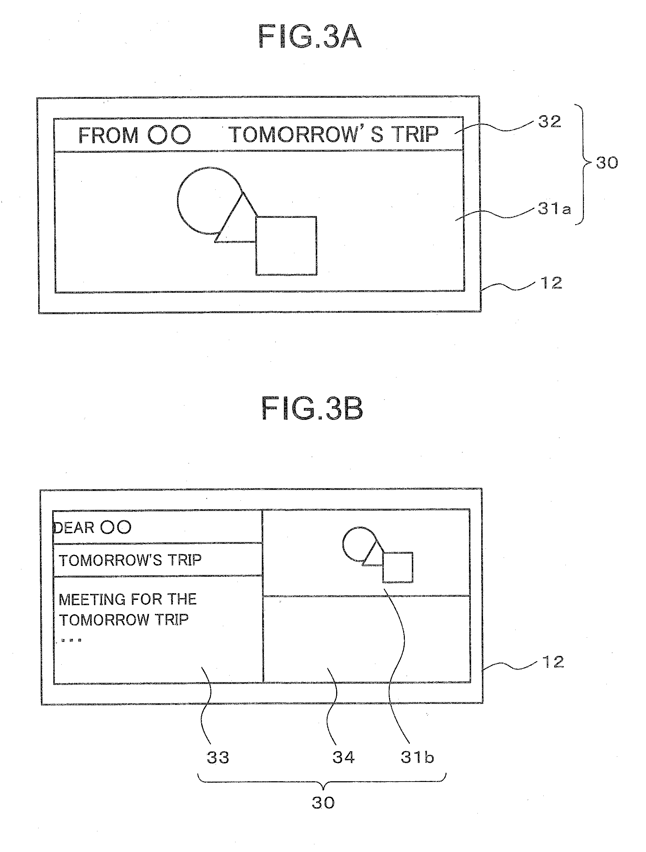

FIG. 3A and FIG. 3B show examples which the display unit 12 displays when an electronic mail is received. FIG. 3A is the example which is displayed in the case that the display control unit 145 displays a information image 32, which indicates that the display control unit 145 receives the electronic mail, together with a picture 31a by the display unit 12. According to FIG. 3A, the information image 32, which is displayed in a display area 30 of the display unit 12 is a telop image. The information image 32 is based on information (application information) which indicates that the electronic mail is received. Contents of the information image (telop image) 32 includes, for example, a sender name and a title of the electronic mail. Further, while the information image 32 is the telop image in FIG. 3A, the information image 32 may be an icon image based on the information (application information) which indicates that the electronic mail is received.

FIG. 3B shows an example which is displayed in the case that the display control unit 145 displays an execution image 33 for an application function, which is corresponding to the application information, together with a picture 31b by the display unit 12 when the detecting unit 13 detects that the form of the operation input unit 11 for the display unit 12 changes from the second form to the first form. According to FIG. 3B, the display control unit 145 divides the display area 30 of the display unit 12 into a plurality of sub-display-a.reas (divided area) and displays the picture 31b in one sub-display-area out of the plural sub-display-areas (divided area) and displays the function executing image 33 in another sub-display-area (divided area). In the case that the function executing image 33 is displayed by the display unit 12 as mentioned above, it is possible for user to operate the portable terminal 1 as well as the case when activating usually Mailer on the function executing image 33. For example, user can read the received mail while scrolling the function executing image 33. Further, user can make a reply mail on the function executing image 33 in response to the received mail. In addition, there may exist a no-display-area 34, which displays nothing, within the display area 30.

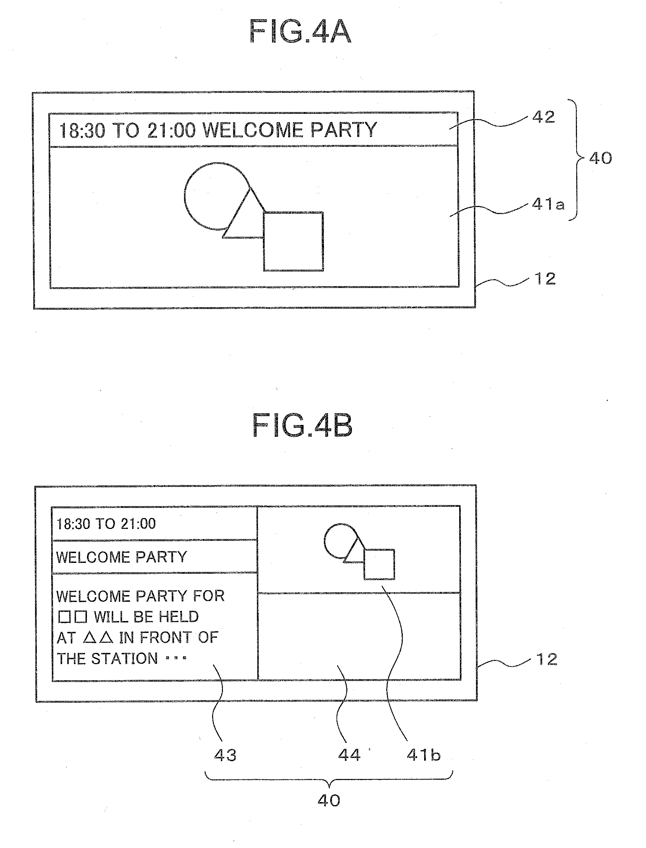

FIG. 4A and FIG. 4B show examples, which the display unit displays when a information is issued on the basis of schedule data, according to the exemplary embodiment. FIG. 4A shows an example which is displayed when the display control unit 145 displays a information image 42, which is based on the schedule data, together with a picture 41a by the display unit 12. According to FIG. 4A, the information image 42 displayed in a display area 40 of the display unit 12 is a telop image which is based on the schedule data (application information). Contents of the information image (telop image) 42 includes, for example, a scheduled time and a title of the schedule. In addition, while the information image 42 is the telop image in FIG. 4A, the information image 42 may be an icon image based on the schedule data (application information).

FIG. 4B shows an example which is displayed in the case that the display control unit 145 displays an execution image 43 for an application function, which is corresponding to the application information, together with a picture 41b by the display unit 12. According to FIG. 4B, the display control unit 145 divides the display area 40 of the display unit 12 into a plurality of sub-display-areas (divided area) and displays the picture 41b in one sub-display-area out of the plural sub-display-areas (divided area) and displays the function executing image 43 in another sub-display-area (divided area). In the case that the function executing image 43 is displayed by the display unit 12 as mentioned above, it is possible for user to operate the portable terminal 1 as well as the case when creating usually the schedule data on the function executing image 43. For example, user can read a determined schedule while scrolling the function executing image 43. Moreover, user can set a new schedule on the function executing image 43. In addition, there may exist a no-display-area 44, which display nothing, in the display area 40.

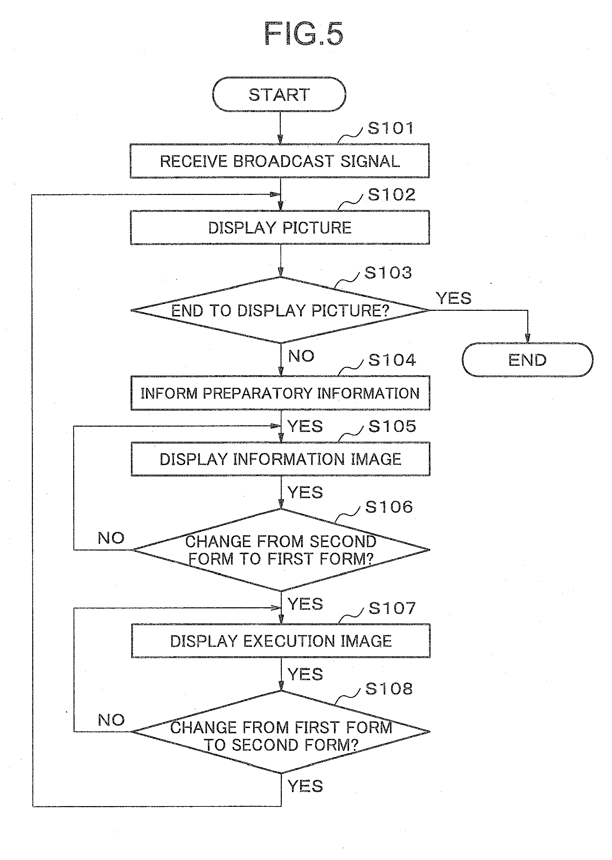

FIG. 5 is a flowchart showing an example of display control operation of the portable terminal 1 according to the first exemplary embodiment. The display control operation of the portable terminal 1 includes a picture displaying step (Step S102) which displays the picture by the display unit 12 so that the vertical direction of the displayed picture and the direction along the shorter side of the display unit 12 may be coincident each other. Furthermore, the display control operation of the portable terminal 1 includes a preparatory information informing step (Step S104) which carries out the function of the portable terminal 1 at a designated timing and informs the preparatory information. Furthermore, the display control operation of the portable terminal 1 includes a information image displaying step (Step S105) which displays the information image, which is based on the preparatory information, together with the picture by the display unit 12. Furthermore, the display control operation of the portable terminal 1 includes a first detection step (Step S106) which detects that the form of the portable terminal 1 is changed from the second form to the first form after the information image displaying step (Step S105). Furthermore, the display control operation of the portable terminal 1 includes an execution image displaying step (Step S107) which displays the execution image for the function, which is corresponding to the preparatory information, together with the picture by the display unit 12, when it is detected that the form of the portable terminal 1 is changed from the second form to the first form in the first detection step (YES in Step S106).

In addition, when it is not detected that the form of the portable terminal 1 is changed from the second form to the first form in the first detection step (NO in Step S106), the information image displaying step (Step S105) is repeated to continue displaying the information image.

Furthermore, the display control operation of the portable terminal 1 includes a second detection step (Step S108) which detects that the form of the portable terminal 1 is changed from the first form to the second form after the execution image displaying step (Step S107). Furthermore, the display control operation of the portable terminal 1 includes a step to stop displaying the function executing image when it is detected that the form of the portable terminal 1 is changed from the first form to the second form in the second detection step (YES in Step S108), and afterward, to proceed to the picture displaying step (Step S102). By the proceeding to the picture displaying step (Step S102), the display unit 12 displays only the picture.

Further, when it is not detected that the form of the portable terminal 1 is changed from the second form to the first form (in the case of NO) in the second detection step (Step S108), the execution image displaying step (Step S107) is repeated to continue displaying the function executing image.

Furthermore, the display control operation of the portable terminal 1 may include a broadcast receiving step (Step S101), as shown in FIG. 5, to receive the TV broadcast signal and to create at least picture data out of the received TV broadcast signal. In the case, the display control operation of the portable terminal 1 displays the picture which is based on the picture data (picture of the TV broadcast) by the display unit 12 in the picture displaying step (Step S102).

Furthermore, when user pushes down an ON and OFF key for the television function, or when power of the portable terminal 1 is turned off, the portable terminal 1 judges that it is a time to stop displaying the picture (YES in Step S 103) and then, stops displaying the picture.

Here, an effect of the portable terminal 1 according to the first exemplary embodiment will be described. The display control unit 145 displays the picture by the display unit 12 so that the vertical direction of the displayed picture and the direction along the shorter side of the display unit 12 may be coincident each other. Therefore, the direction of the picture image for the display unit 12 is maintained. According to the first exemplary embodiment, in the case that the form of the operation input unit 11 for the display unit 12 is changed from the second form to the first form after the display unit 12 displays the information image, which is based on the preparatory information, together with the picture, the display unit 12 displays the function executing image for the function of the portable terminal (electronic mail communication function or schedule managing function) together with the picture. For this reason, it is possible for user to operate the operation input unit 11 for the function while watching the picture with no problem. Furthermore, displaying the function executing image is stopped in the case that the form of the portable terminal 1 is changed from the first form to the second form after displaying the function executing image together with the picture. For this reason, it is possible for user to concentrate on watching the picture in a situation in which it is difficult (impossible) for user to operate the operation input unit 11.

### (A second exemplary embodiment)

A second exemplary embodiment will be described in the following.

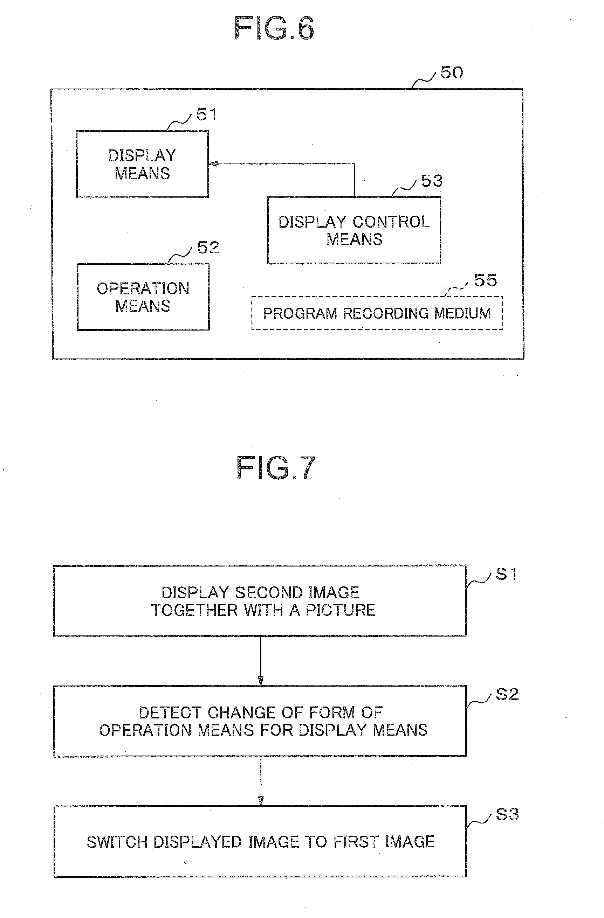

As shown in FIG. 6, a display apparatus 50 according to the second exemplary embodiment includes a display means 51, a operation means 52 and a display control means 53. The display means 51 has a function to display a picture. The operation means 52 can change an own form for the display means 51. The display control means 53 controls a display for the display means 51. The display control means 53 has a function to display a predetermined second image together with the picture on the display means 51. It is assumed to detect that a form of the operation means 52 for the display means is changed from the predetermined second form to a predetermined first form when the display control means displays the picture and the second image on the display means 51. The display control means 53 further has a function to display the predetermined first image, which replaces the second image, together with the picture by the display means 51 in the case.

Each function of the display means 51, the operation means 52 and the display control means 53 mentioned above can be realized, for example, by executing a processor on the basis of a program. The program is stored in a program recording medium 55 such as a nonvolatile memory or the like.

In the display apparatus 50 according to the second exemplary embodiment, for example, it is assumed that the display control means 53 displays the predetermined second image together with the picture by the display means 51 (Step S1 in FIG. 7).

It is assumed to detect that the form of the operation means 52 for the display means 51 is changed from the second predetermined form to the first predetermined form when in the displaying state mentioned above (Step S2 in FIG. 7). In the case, the display control means 53 displays the predetermined first image, which replaces the second image, together with the picture by the display means 51 (Step S3 in FIG. 7).

According to the second exemplary embodiment, the following effect can be obtained. That is, there is a certain display apparatus which can change the form of the operation means for the display means 51 so as to cope with both a case of using the operation means 52 while watching the picture displayed by the display means 51 and a case of not using the operation means 52 while watching the picture displayed by the display means 51. In the case of the display apparatus mentioned above, for example, the form of the operation means, which copes with the case that it is taken into consideration to operate the operation means 52 while watching the picture displayed by the display means 51, is defined as being a first form. In contrast, the form of the operation means, which copes with the case that it is taken into consideration not to operate the operation means 52 while watching the picture displayed by the display means 51, is defined as being a second form. In the case that the display control method according to the second exemplary embodiment is applied to the display apparatus mentioned above, it is possible to carry out the following automatic switch of the display. It is assumed that the second image is displayed when watching the picture displayed by the display means 51 in a state that the operation means 52 is in the second form. In the case that, when finding the second image, the form of the operation means 52 is changed from the second form to the first form in order to operate the operation means 52, the display of the display means 51 is switched automatically as shown in the following. That is, the display means 51 displays the first image together with the picture. If the first image is the execution image for the function which requires to operate the operation means 52, it is possible to carry out the desired function by use of the function executing image while watching the picture.

In other words, it is possible to switch the displayed contents in response to user's needs only by changing the form of the operation means 52 while watching the image displayed by the display means 51, according to the second exemplary embodiment.

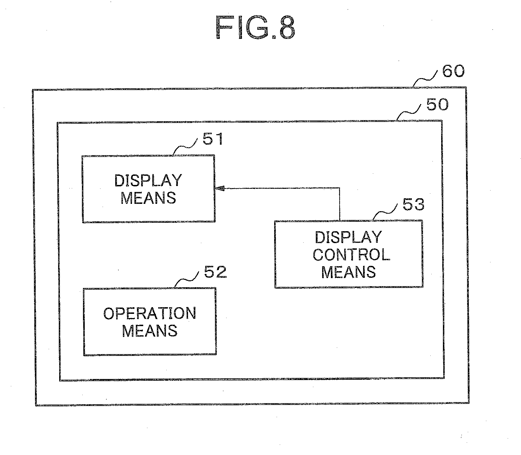

The display apparatus 50 according to the second exemplary embodiment can compose the portable terminal 60 as shown in FIG. 8. In other words, the portable terminal 60 includes the display apparatus 50. In other words, the portable terminal 60 includes the display means 51, the operation means 52 and the display control means 53 which are similar to the means mentioned above. For this reason, this portable terminal 60 also has the same effect as the display apparatus 50 has.

### (Another exemplary embodiment)

Further, the invention is not limited to the first and the second exemplary embodiments, and it is possible to adopt various exemplary embodiments. For example, in the case that the connecting unit, which is described in the first exemplary embodiment, is a slide rail, the detecting unit 13 may detect the change from one form to the other form out of the first form and the second form on the basis of a relative movement distance between the first chassis 10 and the second chassis 20.

Moreover, the operation input unit (operation means) may adopt a touch panel method which enables to operate the operation unit by touching an icon image displayed on the screen. In this case, it is possible easily to change a direction of displaying the icon image which is displayed on the operation input unit (operation means) and is used for operating. In the case, it is possible to change the form of the operation input unit (operation means) for the display means (display unit), by the change of the direction of displaying the icon image which is displayed on the operation input unit (operation means). In other words, it is possible to change the form between the first form which takes it into consideration to operate the operation means while watching the picture displayed by the display means, and the second form which does not take it into consideration to operate the operation means while watching the picture displayed by the display means, without moving the operation input unit (operation means). In the case, the detecting unit 13, which is described in the first exemplary embodiment, may detect the change of the form from one form to the other form out of the first form and the second form on the basis of control information on the direction of displaying the icon image which is displayed on the operation input unit 11.

The operation means, which has the above-mentioned configuration, can provide the same effect as one according to the first and the second exemplary embodiments mentioned above by applying the present invention.

Moreover, a position at which the information image such as a telop image or the like is displayed is not limited to one shown in FIG. 3A or FIG. 4A. Furthermore, the size ratio of the display area for the picture to the display area for the function executing image, and the shape of each display area are not limited to the example shown in FIG. 3B or FIG. 4B. For example, the function executing image may be displayed in an area where a part of area for displaying the picture is excepted in the display area of the display unit 12. Furthermore, the display unit 12 may display a picture whose aspect ratio is changed in the case of displaying the function executing image and the information image.

According to the first exemplary embodiment, in the case that the form of the operation input unit 11 is changed from the first form to the second form when the display unit 12 displays the function executing images 33 and 43, displaying the function executing images 33 and 43 is stopped and afterward, only the picture is displayed by the display unit 12. The display unit 12 may display the information image together with the picture in stead of displaying only the picture after stopping to display the function executing images 33 and 43. In other words, the steps which are carried out after Step S105 may repeat, in the case that it is detected that the form is changed from the first form to the second form in Step S108 in FIG. 5.

Moreover, the display control unit 145 may have a function to stop displaying the information image when it is detected that a predetermined time elapses since displaying the information image is started.

Furthermore, the following exemplary embodiment is applicable to the portable terminal according to the present invention. For example, the portable terminal may take a first display mode that a first direction, which is determined for a operation input unit, and a direction along a shorter side of a display unit are coincident each other. Moreover, the portable terminal may take a second display mode that a second direction, which is different from the first direction, and the direction along the shorter side of the display unit are coincident each other. Furthermore, the portable terminal can change the display mode between the first display mode and the second display mode. The portable terminal includes a display control unit, a function unit and a detecting unit. The display control unit has a function to display a picture by the display unit so that a vertical direction of displaying the picture and the direction along the shorter side of the display unit are coincident each other. The function unit has a function to work at a designated timing and to inform preparatory information to the display control unit. The detecting unit has a function to detect that the display mode of the portable terminal is changed from one display mode to the other display mode out of the first display mode and the second display mode. According to the portable terminal of the exemplary embodiment, the display control unit displays a information image, which is based on the preparatory information, together with the picture by the display unit. When the detecting unit detects afterward that the mode of the portable terminal is changed from the second display mode to the first display mode, the display control unit displays an executing image for a function, which is corresponding to the preparatory information, together with the picture by the display unit.

The above-mentioned portable terminal carries out, for example, the following operation as a display control operation. The display control operation of the portable terminal includes a picture displaying step which displays the picture by the display unit so that the vertical direction of the displayed picture and the direction along the shorter side of the display unit may be coincident each other. Furthermore, the display control operation of the portable terminal includes a preparatory information informing step which carries out the function of the portable terminal at a designated timing and informs the preparatory information. Furthermore, the display control operation of the portable terminal includes a information image displaying step which displays a information image, which is based on the preparatory information, together with the picture by the display unit. Furthermore, the display control operation of the portable terminal includes a first detection step which detects that the mode of the portable terminal is changed from the second display mode to the first display mode after the information image displaying step. Furthermore, the display control operation of the portable terminal includes an execution image displaying step which displays the execution image for the function, which is corresponding to the preparatory information, together with the picture by the display unit, when it is detected that the mode of the portable terminal is changed from the second display mode to the first display mode in the first detection step.

A program for carrying out the above mentioned display control in the portable terminal makes a processor work, and installs the following processes. One of the processes is a picture displaying process which displays the picture by the display unit so that the vertical direction of the displayed picture and the direction along the shorter side of the display unit may be coincident each other. Another one of the processes is a preparatory information informing process which carries out the function of the portable terminal at a predetermined timing, and informs the preparatory information. Further another one of the processes is a information image displaying process which displays the information image, which is based on the preparatory information, with the picture by the display unit. Further another one of the processes is a first detection process which detects that the display mode of the portable terminal is changed from the second display mode to the first display mode after the information image displaying process. Further another one out of the processes is an execution image displaying step which displays the execution image for the function, which is corresponding to the preparatory information, together with the picture by the display unit, when it is detected that the display mode of the portable terminal is changed from the second display mode to the first display mode in the first detection process.

The above-mentioned portable terminal provides a portable terminal, a display control method and a program thereof, which displays an execution image for a function of the portable terminal together with a picture by a display unit, when a display mode of the portable terminal is changed with maintaining a direction of the picture for the display unit.

While the present invention has been described with reference to the exemplary embodiment mentioned above, the present invention is not limited to the above-mentioned exemplary embodiment. It is possible to add various modifications, which are apparent to a person skilled in the art, to the configuration and the details of the present invention within the scope of the present invention.

Further, this application is based upon and claims the benefit of priority from Japanese Patent Application No. 2008-266413, filed on October 15, 2008, the disclosure of which is incorporated herein in its entirety by reference.

### [Industrial Applicability]

The present invention is effective on a display apparatus of which a form of a operation means for a display unit can be changed, and an apparatus, which includes the display apparatus, such as a portable terminal or the like.

## Claims

1. A display apparatus, comprising:
display means for displaying at least any one of a picture, a predetermined first image and a predetermined second image;
operation means for changing an own form for the display means between a predetermined first form and a predetermined second form; and
display control means for displaying the first image, which replaces the second image, together with the picture by the display means in the case that it is detected that the form of the operation means for the display means is changed from the second form to the first form when the second image and the picture are displayed by the display means.

2. The display apparatus according to claim 1, further comprising:
tuner means for receiving a TV broadcast signal, wherein
the picture includes a picture which is based on the TV broadcast signal received by the tuner means.

3. The display apparatus according to claim 1 or claim 2, further comprising:
a first chassis which includes the operation means;
a second chassis which includes the display means;
connecting means for connecting the first chassis and the second chassis together; and
detecting means for detecting that the form of the operation means for the display means is changed from the second form to the first form on the basis of a movement of the connecting means.

4. The display apparatus according to claim 1, claim 2 or claim 3, wherein
an angle of a predetermined virtual base line on the operation means, which is in the first form, to the predetermined virtual base line on the operation means, which is in the second mode, is 90 degrees.

5. The display apparatus according to any one of claim 1 to claim 4, wherein
the first image is a predetermined function executing image related to a predetermined function,
the second image is a predetermined information image related to the function.

6. The display apparatus according to claim 5,
wherein
in the case that the display control means displays the function executing image together with the picture by the display means, the display control means, which divides a display area of the display means into a predetermined plurality of divided areas, displays the picture in one divided area and displays the function executing image in another divided area.

7. The display apparatus according to claim 5 or claim 6, wherein
the information image informs a predetermined part of information which is included in a mail received by an electronic mail communication function.

8. The display apparatus according to claim 5, claim 6 or claim 7, wherein
the information image informs a predetermined part of schedule data which is managed by a schedule managing function.

9. The display apparatus according to any one of claim 5 to claim 8, wherein
the information image is an icon image or a telop image.

10. A portable terminal, comprising:
the display apparatus according to any one of claim 1 to claim 9.

11. A display control method, comprising:
displaying a predetermined second image together with a picture by display means; and
displaying a predetermined first image, which replaces the second image, together with the picture by the display means, in the case that it is detected that operation means, which can change an own form for the display means, changes the form from a predetermined second form to a predetermined first form when in a state of displaying the second image together with the picture.

12. The display control method according to claim 11, wherein
the picture which is displayed by the display means includes a picture of the TV broadcast.

13. The display control method according to claim 11 or claim 12, further comprising:
detecting on the basis of a movement of connecting means that the form of the operation means for the display means is changed from the second form to the first form, in the case that the operation means is equipped on a first chassis and the display means is equipped on a second chassis and the first chassis and the second chassis are connected together by a connecting means.

14. The display control method according to claim 11, claim 12 or claim 13, wherein
an angle of a predetermined virtual base line on the operation unit, which is in the first form, to a predetermined virtual base line on the operation unit, which is in the second form, is 90 degrees.

15. The display control method according to any one of claim 11 to claim 14, wherein
the first image is a predetermined function executing image related to a predetermined function, and
the second image is a predetermined information image related to the function.

16. The display control method according to claim 15, comprising:
dividing a display area of the display means into a predetermined plurality of divided areas in the case of displaying the function executing image together with the picture by the display means; and
displaying the picture in one divided area and displaying the function executing image in another divided area.

17. The display control method according to claim 15 or claim 16, wherein
the information image informs a predetermined part of information which is included in a mail received by an electronic mail communication function.

18. The display control method according to claim 15, claim 16 or claim 17, wherein
the information image informs a predetermined part of schedule data which is managed by a schedule managing function.

19. The display control method according to any one of claim 15 to claim 18, comprising:
displaying the information image by mode of an icon image or a telop image.

20. A program recording medium storing a program for making a display apparatus, which includes display means for displaying at least any one of an picture, a predetermined first image and a predetermined second image and operation means whose form for the display means is changed between a predetermined first form and a predetermined second form, equipped with a function to make the display means display the first image, which replaces the second image, together with the picture in the case that it is detected that the form of the operation means for the display means is changed from the second form to the first form when the second image and the picture are displayed by the display means.

21. The program recording medium according to claim 20, wherein
the program recording medium stores a program for making the display apparatus, which further includes a first chassis including the operation means, a second chassis including the display means, and connecting means for connecting the first chassis and the second chassis together, further equipped with a function to detect on the basis of a movement of the connection means that the form of the operation means for the display means is changed from the second form to the first form.

22. The program recording medium according to claim 20 or claim 21, wherein
in the case of displaying a predetermined function executing image, as the first image, together with the picture by the display means, the program recording medium stores a program for making the display apparatus further equipped with:
a function to divide a display area of the display means into a predetermined plurality of divided areas; and
a function to display the picture in one divided area and to display the function executing image in another divided area.

23. The program recording medium according to claim 20, claim 21 or claim 22, wherein
the program recording medium stores a program for making the display apparatus further equipped with:
a function to display a predetermined information image, which is related to a predetermined function, by mode of an icon image or a telop image, in the case of displaying the information image as the second image.
